# EUROPEAN PATENT SPECIFICATION

(11) **EP 2 473 542 B1**
(45) Date of publication and mention of the grant of the patent: **29.07.2015**
(21) Application number: 10813152.5
(22) Date of filing: 26.08.2010
(51) Int. Cl.: C08G 63/64, C08L 3/00, C08L 33/02, C08G 63/91, C08L 3/06, C08L 69/00, C08J 3/00, C08J 3/22, C08J 5/18, C08K 3/22, C08L 3/02, C08L 33/26, C08L 67/02, C08L 67/04

(54) **POLYMER/THERMOPLASTIC STARCH COMPOSITIONS**
POLYMERE/THERMOPLASTISCHE STÄRKEZUSAMMENSETZUNGEN
COMPOSITIONS DE POLYMÈRE/AMIDON THERMOPLASTIQUE

(30) Priority: 03.09.2009 AU 2009904270
(43) Date of publication of application: 11.07.2012
(73) Proprietor: Co2starch Pty Ltd, Mulgrave, VIC 3170 (AU)
(72) Inventor: CHEN, Changping, Jiangsu (CN); SCHEIRS, John, Moorabbin, Victoria 3189 (AU)
(74) Representative: Cawley, Aimee Elizabeth
(86) International application number: PCT/AU2010/001100
(87) International publication number: WO 2011/026171

(56) References cited:
- WO-A1-2008/011668
- WO-A1-2008/011668
- WO-A1-2010/051589
- US-A- 5 936 014
- US-A- 5 936 014
- PATENT ABSTRACTS OF JAPAN & JP 6 345 956 A (TOKUYAMA SODA CO LTD) 20 December 1994
- CHEMICAL ABSTRACTS, Columbus, Ohio, US; abstract no. 2009:110889, XP008156473 & DU, F.G. ET AL.: 'Fabrication and properties of biodegradable PPC/EVOH/STARCH/ CaC03 composites' JOURNAL OF POLYMER ENGINEERING vol. 28, no. 6-7, 2008, pages 435 - 448

## Description

### FIELD OF THE INVENTION

The present invention relates in general to polymer/thermoplastic starch (TPS) compositions. In particular, the invention relates to biodegradable polymer/TPS compositions, to methods of preparing the same, and to products formed therefrom.

### BACKGROUND OF THE INVENTION

The disposal of consumer waste has become a significant problem in many industrialised countries. For example, there are relatively few sites that remain available for landfill in places such as Europe and Japan. A considerable volume of consumer waste is made up of polymeric material, and there has been a concerted effort to introduce polymer recycling strategies to reduce such polymer waste going to landfill.

However, unlike other materials such as glass, wood and metal, the recycling of polymers can be problematic. For example, polymer recycling techniques typically require the polymers to be sorted according to their chemical composition. In particular, due to the diverse array of different commercial polymers it can be difficult to separate polymer materials from the waste stream in this manner. Furthermore, most polymer recycling techniques involve a melt processing stage which can reduce the physical and mechanical properties of the polymer. Recycled polymers therefore tend to have inferior properties and this can limit the range of applications in which they can be employed.

Apart from problems associated with recycling waste polymer materials, the majority of polymers currently being used are derived from petroleum-based products, making their long-term manufacture unsustainable.

In response to these issues, there has been a marked increase in research directed toward developing biodegradable polymers that can at least in part be manufactured using renewable resources. Unlike conventional polymers, biodegradable polymers can be more readily degraded through the action of microorganisms to produce low molecular weight products that present little, if any, environmental concern. Furthermore, through the action of biodegradation the volume occupied by such polymers in waste streams is significantly reduced.

Much of the research to-date in the field of biodegradable polymers has focussed on utilising naturally occurring bio-polymers such as starch. Starch is a particularly suitable bio-polymer in that it is derived from renewable resources (i.e. plant products), readily available and relatively inexpensive.

In preparing biodegradable polymers, starch is typically utilised by melt mixing it or a modified form thereof with a suitable biodegradable thermoplastic polymer such as polyester. For example, biodegradable polymer compositions may be prepared by melt mixing polyester with starch, a chemically modified starch and/or TPS (formed by melt mixing starch with a plasticiser such as glycerol). However, starch and its various modified forms are quite hydrophilic relative to thermoplastic polymers that are typically melt mixed with it. Melt mixing of starch with other thermoplastic polymers therefore typically results in the formation of multi-phase morphology having a high interfacial tension which can negatively impact on the physical and mechanical properties of the resulting polymer composition.

Considerable research has been devoted to improving the physical and mechanical properties of biodegradable polymer compositions comprising starch. Despite advances in the physical and mechanical properties of biodegradable polymer compositions comprising starch, such polymer composition are generally still renowned for having inferior physical and mechanical properties relative to petroleum derived polymers.

Furthermore, such polymer compositions also tend to suffer from poor processing behaviour, particularly in their conversion into products such as film or sheet. For example, conventional polyester starch polymer compositions typically exhibit poor processing behaviour during blown film production.

Attempts have also been made to address such processing problems. For example, slower and gentler processing techniques can be adopted, and specialised processing equipment has been developed. However, such measures either reduce throughput and/or add cost to the manufacturing process.

In WO2008/011668 there is described a method of preparing a biodegradable polymer composition, said method comprising melt mixing a first biodegradable polyester and a master batch, wherein said master batch has been formed separately by melt mixing in the presence of a transesterification catalyst, a polysaccharide, a second biodegradable polyester and a biodegradable polymer having pendant carboxylic and groups.

Accordingly, there remains an opportunity to develop new polymer/TPS compositions that address or ameliorate one or more disadvantages or shortcomings associated with existing compositions and/or their method of manufacture, or to at least provide a useful alternative to such compositions and their method of manufacture.

### SUMMARY OF THE INVENTION

The present invention provides a biodegradable polymer composition comprising the following components (a)-(e) and/or a reaction product(s) derived from melt mixing the components: (a) polyalkylene carbonate; (b) thermoplastic starch (TPS) and/or its constituent components; (c) polymer having pendant carboxylic acid groups; (d) transesterification catalyst; and (e) one or more biodegradable polyesters.

The present invention therefore further provides a biodegradable polymer composition comprising the following components (a)-(e) and/or a reaction product(s) derived from melt mixing the components: (a) polyalkylene carbonate; (b) thermoplastic starch (TPS) and/or its constituent components; (c) polymer having pendant carboxylic acid groups; (d) transesterification catalyst; and (e) one or more biodegradable polyesters in an amount of about 0.5wt.% to about 4.5wt.% of (a), about 2 wt% to about 63wt.% of (b), about 0.3 to about 27wt.% of (c), about 0.005wt.% to about 0.45wt% of (a), and about 5wt.% to about 85wt.% of (e), relative to the total mass of (a)-(e), and such that the total mass of these components represents at least about 50wt.% of the biodegradable polymer composition.

Those skilled in the art will appreciate that a polyalkylene carbonate is a specific form of polyester. For avoidance of any doubt, where a composition in accordance with the invention comprises polyalkylene carbonate and one or more biodegradable polyesters, the one or more biodegradable polyesters are not intended to include polyalkylene carbonate type polyesters (i.e. they are intended to define polyesters other than polyalkylene carbonates).

Unlike most polyesters (and in fact most other polymers), polyalkylene carbonates can be manufactured by polymerising carbon dioxide and an alkylene oxide. By in effect "fixing" carbon dioxide, the manufacturing process of polyalkylene carbonates affords a reduced carbon footprint relative to the manufacture of most other polymers. With carbon accounting now being a prominent consideration in the manufacture of consumer goods, utilising such low carbon footprint materials is particularly attractive.

Biodegradable polymer compositions comprising starch and polyalkylene carbonates have previously been prepared (see for example Lu et al - Journal of Biomedical Materials Research Part A, June 15, 2006; 77(4): 653-658). However, such polymer compositions have typically presented relatively poor mechanical and processing properties.

Polymer compositions in accordance with the invention can advantageously not only exhibit excellent biodegradability and physical and mechanical properties, but also offer improved processing behaviour relative to conventional biodegradable polymer compositions comprising starch or starch and polyalkylene carbonates.

The present invention also provides a method of preparing a biodegradable polymer composition, said method comprising melt mixing together: (a) polyalkylene carbonate; (b) thermoplastic starch (TPS) and/or its constituent components; (c) polymer having pendant carboxylic acid groups; and (d) transesterification catalyst

In one embodiment, melt mixed product formed according to this method is itself melt mixed with one or more biodegradable polyesters.

The present invention therefore also provides a method of preparing a biodegradable polymer composition, said method comprising melt mixing a masterbatch together with one or more biodegradable polyesters, wherein the masterbatch has been formed by melt mixing together: (a) polyalkylene carbonate; (b) thermoplastic starch (TPS) and/or its constituent components; (c) polymer having pendant carboxylic acid groups; and (d) transesterification catalyst.

In one embodiment, the masterbatch provides the only source of starch that is melt mixed with the one or more biodegradable polyesters to form the biodegradable polymer composition.

Without wishing to be limited by theory, it is believed that the excellent properties of compositions in accordance with the invention are at least in part derived from the unique combination of components in the composition and also the manner in which the compositions are prepared. Preparing the masterbatch by melt mixing components (a)-(d), and then melt mixing the so formed masterbatch with the one or more biodegradable polyesters, is believed to afford a polymer composition having excellent compatibility between its constituent components. This in turn is believed to minimise the formation of multi-phase morphology within the resulting composition and give rise to the excellent physical, mechanical and processing properties of the composition.

The excellent properties of the polymer composition in accordance with the invention can advantageously be obtained using a relatively high starch and/or polyalkylene carbonate content.

Further aspects of the invention are described below.

### DETAILED DESCRIPTION OF THE INVENTION

The polymer compositions in accordance with the invention are biodegradable. Those skilled in the art will appreciate that the term "biodegradable" does not have a uniform universal definition. For avoidance of any doubt, the term "biodegradable" used herein in association with the term "polymer", "polymer composition" or specific materials such as a "starch", "TPS", "polyalkylene carbonate", " polymer having pendant carboxylic acid groups" and "polyester", is intended to denote a material that meets the biodegradability criteria specified in EN 13432 or ASTM 6400. In other words, a polymer composition, for example, is considered to be biodegradable if, upon exposure to a composting environment, 90% of it disintegrates into particles having an average size of less than 2mm within twelve weeks, and after six months at least 60% of it, in the case of ASTM 6400, or at least 90% of it, in the case of EN 13432, has degraded into carbon dioxide and/or water.

In some embodiments, biodegradable polymer compositions in accordance with the invention will meet the more stringent biodegradability criteria set forth in EN 13432.

The biodegradable polymer compositions in accordance with the invention must of course comprise biodegradable components. However, it is possible for the compositions to comprise a non-biodegradable component(s) provided that it is not present in an amount that adversely affects the biodegradability of the overall composition.

In one embodiment, the polyalkylene carbonate is biodegradable polyalkylene carbonate.

In one embodiment, the polymer having pendant carboxylic acid groups is biodegradable polymer having pendant carboxylic acid groups.

In one embodiment, the thermoplastic starch (TPS) and its constituent components are biodegradable.

The biodegradable polymer composition in accordance with the invention comprise components (a)-(e) and/or a reaction product(s) derived from melt mixing the respective (a)-(e) components. As will be discussed in more detail below, the polymer composition may be provided in the form of a melt mixed product. During formation of such a melt mixed product it is believed that two or more of components within the group (a)-(e) may undergo a chemical reaction to form a reaction product(s). Those skilled in the art will appreciate that it can be difficult to clearly define such a reaction product(s) and therefore it is often more convenient to refer to such a product(s) simply as a "reaction product(s)" of the components or a product(s) formed from a reaction between two of more of the respective components. The compositions may therefore comprise a mixture of the original components and/or one or more reaction product(s) of these components.

Having said this, the compositions in accordance with the invention are intended to embrace both pre-melt mixed (i.e. a physical blend or a mere admixture of the components) and post-melt mixed (i.e. an integral intimate melt blend of the components formed after melt mixing) forms of the compositions. Nevertheless, it will be appreciated that a composition in accordance with the invention in its pre-melt mixed form will generally be prepared for the sole purpose of being subsequently melt mixed into a melt mixed product.

There is no particular limitation on the type of polyalkylene carbonate that may be used in accordance with the invention provided that the resulting polymer composition is biodegradable. Polyalkylene carbonates may be prepared by techniques know to those skilled in the art, for example by copolymersing carbon dioxide with an alkylene oxide in the presence of a suitable catalyst such as zinc gluterate. The use of polyalkylene carbonates in accordance with the invention advantageously enables the polymer compositions to be prepared with a reduced carbon footprint compared with conventional starch/polyester polymer compositions.

Examples of suitable polyalkylene carbonates include polyethylene carbonate (PEC) and polypropylene carbonate (PPC).

The polyalkylene carbonate may have: a molecular weight ranging from about 80,000 - 150,000 Dalton, for example about 110,000 Dalton; and/or a melt flow index (MFI) ranging from about 5 to about 20 g/10min, for example from about 9 to about 15 g/10min; and/or a glass transition temperature ranging from about 30°C to 40°C, for example from about 35°C to about 40°C.

MFI values referred to herein are those determined according to ASTM D 1238 at a temperature of 190°C with a ram weight of 2.16kg.

Molecular weight values referred to herein are number average molecular weight values determined by gel permeation chromatography (GPC).

The compositions in accordance with the invention comprise TPS and/or its constituent components. Those skilled in the art will appreciate that TPS is a destructured form of starch comprising one or more plasticisers. Accordingly, as used herein, the expression "its constituent components" in the context of TPS is intended to mean the individual ingredients that are used to prepare TPS.

Thus, TPS *per se* may be present in a pre-melt mixed composition of the invention, or TPS can advantageously be prepared *in situ* from its constituent components during melt mixing of the composition.

Accordingly, a pre-melt mixed composition in accordance with the invention may comprise: (a) polyalkylene carbonate; (b) thermoplastic starch (TPS) and/or its constituent components (namely starch and one or more plasticisers); (c) polymer having pendant carboxylic acid groups; and (d) transesterification catalyst. Upon being melt mixed, if the composition comprises the constituent components of TPS, they will be converted into TPS during melt mixing. In other words, in such a post-melt mixed composition it is the intention that any constituent components of TPS in the pre-melt mixed composition will be substantially converted into TPS during melt mixing.

Starch is found chiefly in seeds, fruits, tubers, roots and stem pith of plants, and is a naturally derived polymer made up of repeating glucose groups linked by glucosidic linkages in the 1-4 carbon positions. Starch consists of two types of alpha-D-glucose polymers: amylose, a substantially linear polymer with molecular weight of about 1 x 10⁵; and amylopectin, a highly branched polymer with very high molecular weight of the order 1 x 10⁷. Each repeating glucose unit typically has three free hydroxyl groups, thereby providing the polymer with hydrophilic properties and reactive functional groups. Most starches contain 20 to 30% amylose and 70 to 80% amylopectin. However, depending on the origin of the starch the ratio of amylose to amylopectin can vary significantly. For example, some corn hybrids provide starch with 100% amylopectin (waxy corn starch), or progressively higher amylose content ranging from 50 to 95%.

Starch usually has a water content of about 15wt.%. However, the starch can be dried to reduce its water content to below 1%. The water content of the starch and or TPS used in accordance with the invention will generally be less than about 1wt.%, for example less than about 0.5wt.%.

Starch typically exists in small granules having a crystallinity ranging from about 15 to 45%. The size of the granules may vary depending upon the origin of the starch. For example, corn starch typically has a particle size diameter ranging from about 5 µm to about 40µm, whereas potato starch typically has a particle size diameter ranging from about 50µm to about 100µm.

This "native" form of starch may also be chemically modified. Chemically modified starch includes, but is not limited to, oxidised starch, etherificated starch, esterified starch, crosslinked starch or a combination of such chemical modifications (e.g. etherificated and esterified starch). Chemically modified starch is generally prepared by reacting the hydroxyl groups of starch with one or more reagents. The degree of reaction, often referred to as the degree of substitution (DS), can significantly alter the physiochemical properties of the modified starch compared with the corresponding native starch. The DS for a native starch is designated as 0 and can range up to 3 for a fully substituted modified starch. Depending upon the type of substituent and the DS, a chemically modified starch can exhibit considerably different hydrophilic/hydrophobic character relative to native starch.

Both native and chemically modified starch generally exhibit poor thermoplastic properties. To improve such properties, the starch may be converted to TPS by means well known in the art. For example, native or chemically modified starch may be melt processed with one or more plasticisers. Polyhydric alcohols are generally used as plasticisers in the manufacture of TPS.

Reference herein to the wt. % of TPS is therefore intended to include the collective mass of both the starch and plasticiser constituent components of the TPS.

The starch from which the TPS may be derived includes, but is not limited to, corn starch, potato starch, wheat starch, soy bean starch, tapioca starch, hi-amylose starch or combinations thereof.

Where the starch is chemically modified, it will generally be etherificated or esterified. Suitable etherificated starches include, but are not limited to, those which are substituted with ethyl and/or propyl groups. Suitable esterified starches include, but are not limited to, those that are substituted with actyl, propanoyl and/or butanoyl groups.

In one embodiment of the invention, the starch used to prepare the TPS is corn starch or corn starch acetate having a DS of about > 0.1.

The TPS will generally also comprise or be formed using one or more polyhydric alcohol plasticisers. Suitable polyhydric alcohols include, but are not limited to glycerol, ethylene glycol, propylene glycol, ethylene diglycol, propylene diglycol, ethylene triglycol, propylene triglycol, polyethylene glycol, polypropylene glycol, 1,2-propanediol, 1,3-propanediol, 1,2-butanediol, 1,3-butanediol, 1,4-butanediol, 1,5-pentanediol, 1,6-hexanediol, 1,5-hexanediol, 1,2,6-hexanetriol, 1,3,5-hexanetriol, neo-pentyl glycol, trimethylol propane, pentaerythritol, xylitol, sorbitol, and the acetate, ethoxylate, and propoxylate derivatives thereof.

In one embodiment, the TPS comprises glycerol and/or sorbitol plasticisers.

Where a mixture of glycerol and sorbitol plasticisers are used, it is preferable that they are present in a weight ratio ranging from about 2:1 to about 3:1.

The plasticiser content of the TPS will generally range from about 5 wt. % to about 50 wt. %, for example from about 10 wt. % to about 40 wt. %, or from about 15 wt. % to about 40 wt. %, relative to the combined mass of the starch and plasticiser components.

Thus, the constituent components of TPS may comprise from about 5 wt. % to about 50 wt. plasticiser and from about 50 wt. % to about 95 wt.% starch, for example from about 10 wt. % to about 40 wt. plasticiser and from about 60 wt. % to about 90 wt.% starch, or for example from about 15 wt. % to about 40 wt. plasticiser and from about 60 wt. % to about 85 wt.% starch.

Where the compositions in accordance with the invention comprise the constituent components of TPS, the total mass of these components may be considered equivalent to the mass of TPS *per se.*

The compositions in accordance with the invention also comprise polymer having pendant carboxylic acid groups. Reference to the polymer having "pendant carboxylic acid groups" is intended to mean that the carboxylic acid groups (i.e. -COOH) are present as substituents along the polymeric backbone of a polymer, for example a biodegradable polymer. The acid groups may be attached directly to the polymeric backbone or attached to the backbone by a spacer group such as an alkylene group (e.g. C₁-C₆ alkylene).

Suitable types of polymer having pendant carboxylic acid groups that may be used in accordance with the invention include, but are not limited to, ethylene acrylic acid (EAA) copolymer, poly(EAA-vinyl alcohol) (EAAVA), poly(acrylic acid) (PAA), poly(methacrylic acid) (PMA), ethylene-methacrylic acid copolymers (EMAA), and poly(acrylamide-acrylic acid) (PAAA).

The polymer having pendant carboxylic acid groups will generally have a MFI, (as measured at 190°C using 2.16 kg weight) of greater than about 15, preferably ranging from about 15 to about 50, more preferably from about 15 to about 20.

The polymer having pendant carboxylic acid groups will generally have a % acid value (as determined by ASTM D4094-00) of greater than about 7%, preferably greater than or equal to about 9%.

The biodegradable polymer compositions in accordance with the invention further comprise a transesterification catalyst. Suitable transesterification catalysts include, but are not limited to, alkali metal hydroxides such as sodium and/or potassium hydroxide. The type of catalyst employed preferably has low ecotoxicity. Antimony based transesterification catalysts will therefore not generally be used. The catalyst may be provided in solution, for example in an aqueous solution.

In one aspect of the invention, the biodegradable polymer composition comprises the following components (a)-(d) and/or a reaction product(s) derived from melt mixing the components: (a) polyalkylene carbonate; (b) thermoplastic starch (TPS) and/or its constituent components; (c) polymer having pendant carboxylic acid groups; and (d) transesterification catalyst. For convenience this particular composition may hereinafter be referred to as a "masterbatch".

The term "masterbatch" is used herein simply as a convenient way of referring to the composition comprising components (a)-(d) and/or a reaction product(s) derived from melt mixing the components.

The masterbatch may be provided in a pre-melt mixed form or a post-melt mixed form. When in a pre-melt-mixed form, the masterbatch will typically have been prepared for the purpose of being melt mixed. When in a post-melt mixed form, the masterbatch may comprise one or more product(s) formed from a reaction between two or more of the components used to prepare the masterbatch.

As will be discussed in more detail below, when in a post-melt mixed form, the masterbatch may itself be melt mixed with one or more biodegradable polyesters to form a biodegradable polymer composition in accordance with the invention.

To provide the masterbatch in a melt mixed form, components (a) polyalkylene carbonate, (b) thermoplastic starch (TPS) and/or its constituent components; (c) polymer having pendant carboxylic acid groups, and (d) transesterification catalyst, can first be physically blended in a high speed mixer. The resulting physical blend of these components may then be melt mixed.

Melt mixing may be performed using techniques and equipment well known in the art. For example, melt mixing may be achieved using continuous extrusion equipment such as twin screw extruders, single screw extruders, other multiple screw extruders or Farell continuous mixers. Melt mixing is conducted for sufficient time and at a suitable temperature to promote intimate blending between the composition constituents. Those skilled in the art will appreciate that melt mixing is generally performed within a suitable temperature range and that this range will vary depending upon the nature of the components being melt mixed.

Under certain circumstances, it may be desirable to vent or apply vacuum to the melt mixing process to allow volatile components such as water to be removed from the polymer melt.

Melt mixing that is performed in accordance with the invention may promote reaction between the components being melt mixed. The melt mixing process might therefore also be described as reactive melt mixing, for example reactive extrusion.

Without wishing to be limited by theory, it is believed that upon being melt mixed, starch present in the masterbatch composition may undergo a degree of transesterification with the polyalkylene carbonate and/or the polymer having pendant carboxylic acid groups. Such reactions are believed to be facilitated by the presence of the transesterification catalyst. In particular, transesterification catalyst is believed to function by lowering the melt processing temperature at which the masterbatch constituents may be melt mixed and undergo reaction compared with that which would be required to promote the same degree of reaction in the absence of the catalyst.

While the catalyst is referred to as a "transesterification" catalyst, those skilled in the art will appreciate from the nature of the constituents being melt mixed to prepare the masterbatch that other reactions such as condensation and ester exchange reactions may also take place. Thus, it is to be understood that reference herein to the term "transesterification" is intended to embrace other mechanisms of reaction that can occur between ester, alcohol and acid groups such as ester exchange and condensation reactions.

Those skilled in the art will also appreciate that transesterification between starch, the polyalkylene carbonate and/or the polymer having pendant carboxylic acid groups will typically result in the formation of a block co-polymer(s). It is believed that a such block co-polymer(s) may function as a compatibiliser for any starch, polyalkylene carbonate and/or polymer having pendant carboxylic acid groups that has not undergone transesterification. Thus, irrespective of whether only part or all of the starch undergoes transesterification with the polyalkylene carbonate and/or the polymer having pendant carboxylic acid groups, a melt mixed form of the masterbatch is believed to present as a relatively homogenous composition at least in terms of these three components.

Compatibilised components present in polymer compositions, such as a melt mixed form of the masterbatch, may be readily determined experimentally by imaging the composition and/or by measuring the physical and mechanical properties of the composition. For example, the a melt mixed form of the masterbatch may be cryogenically frozen, fractured then viewed under a scanning electron microscope to evaluate the level of adhesion between the dispersed phase and the continuous phase.

The masterbatch may be prepared and conveniently stored for future use. Alternatively, a melt mixed form of the masterbatch may be prepared and then subsequently combined and melt mixed with one or more biodegradable polyesters. In that case, the resulting biodegradable polymer composition may be described as having been prepared in a two stage melt mixing process. Further detail in relation to such a process is discussed below.

Generally, the masterbatch will comprise or be prepared by melt mixing together about 5wt.% to about 50wt.% polyalkylene carbonate, about 20wt.% to about 70wt.% thermoplastic starch (TPS) and/or its constituent components, about 3wt% to about 30wt.% polymer having pendant carboxylic acid groups, and about 0.05wt.% to about 0.5wt.% transesterification catalyst, relative to the total mass of these components, and such that the total mass of these components represents at least: about 50wt.%, about 65wt.%, about 75wt.%, or about 85wt.% of the total mass of the masterbatch.

In one embodiment, the masterbatch comprises or is prepared by melt mixing together about 5wt.% to about 40wt.% polyalkylene carbonate, about 25wt.% to about 60wt.% thermoplastic starch (TPS) and/or its constituent components, about 5wt.% to about 25wt.% polymer having pendant carboxylic acid groups, and about 0.05wt.% to about 0.4wt.% transesterification catalyst, relative to the total mass of these components, and such that the total mass of these components represents at least: about 50wt.%, about 65wt.%, about 75wt.%, or about 85wt.% of the total mass of the masterbatch.

In a further embodiment, the masterbatch comprises or is prepared by melt mixing together about 10wt.% to about 40wt.% polyalkylene carbonate, about 40wt.% to about 60wt.% thermoplastic starch (TPS) and/or its constituent components, about 10wt.% to about 20wt.% polymer having pendant carboxylic acid groups, and about 0.05wt.% to about 0.30wt.% transesterification catalyst, relative to the total mass of these components, and such that the total mass of these components represents at least: about 50wt.%, about 65wt.%, about 75wt.%, or about 85wt.% of the total mass of the masterbatch.

In the context of the masterbatch comprising components (a)-(d) in the aforementioned amounts, where the masterbatch is in a melt mixed form it will be appreciated that the some or all of the components may be present in the form a reaction product (s) derived from a reaction between two or more of the components.

Thus, where the masterbatch is said to comprise components (a)-(d), it may comprise these components *per se* and/or a product(s) formed from a melt reaction between two or more of the components.

The biodegradable polymer compositions in accordance with the invention, or the constituents used in the method of preparing such compositions, may further comprise one or more additives provided that such additives do not adversely impact on the biodegradability of the polymer composition.

The additives may include fillers such as calcium carbonate, silicon dioxide, talc, clays (e.g.montmorillonite), titanium dioxide and natural fibres (e.g. wood powder, paper pulp and/or other cellulosic materials); pigments; anti-static agents; stabilisers; additional polymer material (e.g. ethylene vinyl acetate (EVA)); blowing agents; processing aids such as lubricants; fluidity enhancers; anti-retrogradation additives; plasticisers as hereinbefore described; and antiblocking agents such as silicon dioxide.

In one embodiment, EVA is included in the biodegradable polymer composition. Those skilled in the art will appreciate that EVA is a copolymer of ethylene and vinyl acetate. The weight percent of vinyl acetate residue in the copolymer will generally range from about 10wt.% to about 40wt.%, with the remainder being ethylene residue. When used in the biodegradable polymer composition, an additional polymer material such as EVA will generally be present in an amount ranging from about 0.5wt.% to about 10wt.%.

Suitable lubricant additives include, but are not limited to, calcium stearate, steric acid, magnesium stearate, oxidised polyethylene, oleamide, stearamide and erucamide. When used, a lubricant will generally be present in the biodegradable polymer composition in an amount ranging from about 0.2wt.% to 5 wt.%, for example 0.5wt.% to 3 wt.%.

Suitable fluidity enhancers include, but are not limited to, monoglycerides, glucose fat diethylene glycol dinitrate and products sold under the trade name Siben-60 or Siben-80. When used, a fluidity enhancer will generally be present in the biodegradable polymer composition in an amount ranging from about 1wt.% to about 2wt.%.

Suitable anti-retrogradation additives include, but are not limited to, distilled monoglyceride such as glycerol monostearate (GMS). When used, anti-retrogradation additives will generally be present in the biodegradable polymer composition in an amount ranging from about 0.5wt.% to about 4wt.%. An additive such as distilled monoglyceride is also believed to assist with the dispersability and stabilisation of the starch.

When used in the biodegradable polymer composition, an antiblocking agent such as silicon dioxide will generally be present in an amount ranging from about 0.25wt.% to 0.5wt.%.

When preparing biodegradable polymer compositions in accordance with methods of the invention, if employed, one or more such additives will generally be included in the masterbatch composition.

Where the masterbatch composition comprises one or more such additives, reference herein to the term "masterbatch" will of course be extended to include these additives.

A biodegradable polymer composition in accordance with the invention may comprise or be prepared using one or more biodegradable polyesters. There is no particular limitation regarding the polyester that may be used provided that it is biodegradable.

Examples of suitable biodegradable polyesters include, but are not limited to, polycaprolactone (PCL) as sold by Union Carbide under the trade name Tone^{™} (e.g. Tone P-300, P-700, P-767 and P-787 having a weight average molecular weight of about 10,000, 40,000, 43,000 and 80,000, respectively), or those sold by Solvay under the trade name CAPA 6800 and CAPA FB100 having a molecular weight of 80,000 and 100,000 Daltons, respectively; polylactic acid (PLA) as sold under the trade name Natureworks™ PLA by Cargill; polyhydroxy butyrate (PHB) as sold under the trade name Biocycle™ or Biomer™ by Biomer, Germany; polyethylene succinate (PES) and polybutylene succinate (PBS) as sold under the trade name Bionolle^{™} by Showa Hi Polymer Company (e.g. Bionolle^{™} 1001 (PBS) and Bionelle^{™} 6000 (PES)); polybutylene adipate (PBA) as sold under the trade name Skygreen™ SG100 from SK Chemicals Korea; poly(butylene adipate/terephthalate) (PBAT) aliphatic/aromatic copolyesters such as Ecoflex^{™} by BASF, or EnPOL^{™} G8060 and EnPOL^{™} 8000 by Ire Chemical Ltd of Seoul; poly(hydroxybutyrate valerate) (PHBV) by Metabolix Inc. USA; cellulose acetate butyrate (CAB) and cellulose acetate propionate (CAP) supplied by Eastman Chemicals; or combinations thereof.

The biodegradable polyester will generally have a MFI of no more than about 5 g/10 min. For example, the MFI may be no more than about 4, no more than about 3 or no more than about 2 g/10 min. The biodegradable polyester will generally have a MFI ranging from about 1 to about 5 g/10 min.

In accordance with a method of the invention, a biodegradable polymer composition is prepared by melt mixing the masterbatch together with one or more biodegradable polyesters, wherein the masterbatch has been formed by melt mixing together components (a)-(d) as hereinbefore described. Melt mixing the one or more biodegradable polyesters with the masterbatch, which is itself is in a melt mixed form, has been found to promote a higher degree of compatibilisation of all components present in the resulting product compared with melt mixing together a mere admixture of components (a)-(d) in the masterbatch and one or more biodegradable polyesters.

Without wishing to be limited by theory, it is believed that the highly compatibilised composition of the masterbatch facilitates effective and efficient melt mixing with the one or more biodegradable polyesters. In particular, "compatibiliser" type copolymers that are believed to be present in the melt mixed form of the masterbatch are believed to assist with compatibilising the composition of the masterbatch with the one or more polyesters.

By first forming a melt mixed form of the masterbatch and then melt mixing it with the one or more biodegradable polyesters it has been found that the resulting biodegradable polymer composition may be prepared using a minimum melt mixing temperature while still achieving excellent compatibilisation of components present in the composition.

By the expression "minimum melt mixing temperature" is meant the lowest temperature or temperature range at which the composition can be maintained to enable it to be effectively melt mixed while minimising or avoiding thermal degradation of components within the composition. The minimum melt mixing temperature will of course vary depending upon the materials being mixed, and this can be readily determined by a person skilled in the art.

Being able to prepare the composition at a minimum melt processing temperature advantageously minimises thermal degradation of the components of the composition.

The biodegradable polymer composition comprising components (a)-(e) will generally contain these components, and/or a reaction product(s) derived from melt mixing the components, in an amount ranging from about 0.5wt.% to about 45wt.% of (a), about 2wt.% to about 63wt.% of (b), about 0.3 to about 27wt.% of (c), about 0.005wt.% to about 0.45wt.% of (d), and about 5wt.% to about 85wt.% of (e), relative to the total mass of (a)-(e), and such that the total mass of these components represents at least about 50wt.%, about 65wt.%, about 75wt.%, or about 85wt.% of the total mass of the biodegradable polymer composition.

In one embodiment, the biodegradable polymer composition comprising components (a)-(e) contains these components, and/or a reaction product(s) derived from melt mixing the components, in an amount ranging from about 0.75wt.% to about 28wt.% of (a), about 4wt.% to about 45wt.% of (b), about 0.75 to about 18wt.% of (c), about 0.0075wt.% to about 0.3wt.% of (d), and about 30wt.% to about 90wt.% of (e), relative to the total mass of (a)-(e), and such that the total mass of these components represents at least about 50wt.%, about 65wt.%, about 75wt.%, or about 85wt.% of the total mass of the biodegradable polymer composition.

In a further embodiment, the biodegradable polymer composition comprising components (a)-(e) contains these components, and/or a reaction product(s) derived from melt mixing the components, in an amount ranging from about 2wt.% to about 22wt.% of (a), about 8wt.% to about 33wt.% of (b), about 2wt.% to about 11wt.% of (c), about 0.01wt.% to about 0.165wt.% of (d), and about 40wt.% to about 75wt.% of (e), relative to the total mass of (a)-(e), and such that the total mass of these components represents at least about 50wt.%, about 65wt.%, about 75wt.%, or about 85wt.% of the total mass of the biodegradable polymer composition.

For avoidance of any doubt, reference herein to the compositions comprising a specific wt.% of components (a)-(d) or (a)-(e), and/or a reaction product(s) derived from melt mixing the respective components in these groups, is intended to mean that the composition may contain the individual components in the specified amounts and/or a reaction product(s) derived from the specified amount of two or more of such components. Thus, the total wt.% of the components and/or a reaction product(s) derived therefrom (if present and taking into account the liberation of any reaction by-products) will generally not exceed the total wt.% of the components as present in an unreacted form.

In accordance with a method of the invention, a biodegradable polymer composition is prepared by melt mixing the masterbatch together with one or more biodegradable polyesters. Generally, the biodegradable polymer composition will be prepared by melt mixing together about 10wt.% to about 90wt.% of the masterbatch and about 5wt.% to about 85wt.% of one or more biodegradable polyesters, such that the total mass of these components represents at least about 50wt.%, about 65wt.%, about 75wt.%, or about 85wt.% of the total mass of the resulting biodegradable polymer composition.

In one embodiment, the biodegradable polymer composition is prepared by melt mixing together about 15wt.% to about 70wt.% of the masterbatch and about 25wt.% to about 80wt.% of one or more biodegradable polyesters, such that the total mass of these components represents at least about 50wt.%, about 65wt.%, about 75wt.%, or about 85wt.% of the total mass of the resulting biodegradable polymer composition.

In a further embodiment, the biodegradable polymer composition is prepared by melt mixing together about 20wt.% to about 55wt.% of the masterbatch and about 40wt.% to about 75wt.% of one or more biodegradable polyesters, such that the total mass of these components represents at least about 50wt.%, about 65wt.%, about 75wt.%, or about 85wt.% of the total mass of the resulting biodegradable polymer composition.

In one embodiment, the masterbatch provides the only source of starch that is used to prepare the biodegradable polymer composition. Incorporating the starch only in the masterbatch has been found to maximise the ability to attain a highly compatibilised composition of the resulting biodegradable polymer. This in turn is believed to impart improved physical and mechanical properties to the composition.

Although less preferred, the method of preparing the biodegradable polymer composition may comprise melt mixing the masterbatch, one or more biodegradable polyesters and starch and/or TPS and/or its constituent components. In that case, the starch and/or TPS and/or its constituent components will generally be used in amount of no more than about 15wt.%, no more than about 10wt.% or no more than about 5wt.%, relative to the total mass of the components being melt mixed.

In one embodiment, a biodegradable polymer composition is prepared by melt mixing the masterbatch together with one or more biodegradable polyesters and a polyepoxide, wherein the masterbatch has been formed by melt mixing together components (a)-(d) as hereinbefore described.

By "polyepoxide" is meant monomeric or polymeric materials having two or more epoxy groups on average per molecule. Provided that the two or more epoxy groups are capable of undergoing reaction with acid and/or alcohol groups of components present within the composition, the type of epoxy group is not critical. However, polyepoxides comprising vicinal epoxy groups are generally preferred.

Suitable polyepoxides include, but are not limited to, diepoxides such as a diglycidyl ether of bisphenol A, butadiene diepoxide, 3,4-epoxycyclohexylmethyl-(3,4-epoxy) cyclohexane-carboxylate, vinyl cyclohexene dioxide, 4,4'-di(1,2-epoxyethyl)-diphenyl ether, 4,4'-(1,2-epoxyethyl) biphenyl, 2,2-bis(3,4-epoxycyclohexyl) propane, a diglycidyl ether of resorcinol, a diglycidyl ether of phloroglucinol, a diglycidyl ether of methylphloroglucinol, bis(2,3-epoxycyclopentyl) ether, 2-(3,4-epoxy) cyclohexane-5,5-spiro(3,4-epoxy)-cyclohexane-m-dioxane and bis(3,4-epoxy-6-methylcyclohexyl)adipate, N,N'-m-phenylene-bis (4,5-epoxy-1,2-cyclohexanedicarboxyimide), and tri-and higher epoxides such as a triglycidyl ether of p-aminophenol, polyallylglycidyl ether, 1,3,5-tri(1,2-epoxyethyl) benzene, 2,2',4,4'-tetraglycidoxybenzophenone, tetraglycidoxytetraphenylethane, a polyglycidyl ether of phenol-formaldehyde novolac, a triglycidyl ether of glycerin, a triglycidyl ether of trimethylolpropane, poly glycidyl (meth) acrylate oligomers and (co) polymers, and combinations thereof.

Preferred polyepoxides are those formed through the polymerisation of glycidyl methacrylate (GMA). The GMA may be homopolymerised of copolymerised with one or more other monomers. For example, the GMA based polyepoxide may be a multi-functional styrene-acrylic oligomer having a molecular weight of less than about 7,000 and having general formula (I): 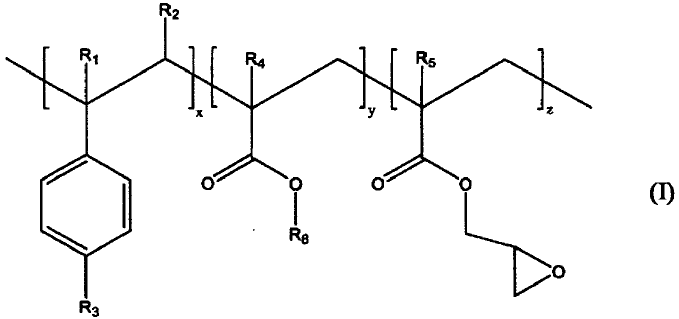 where R₁-R₅ are each independently selected from H and alkyl, R₆ is an alkyl group, and x, y and z are each independently an integer between 1 and 20.

Suitable GMA derived polyepoxides may be obtained commercially, for example, Joncryl^{®} ADR-4368 by BASF.

When melt mixing the masterbatch together with one or more biodegradable polyesters and a polyepoxide, the polyepoxide is believed to react with carboxylic acid and/or alcohol groups of the components being melt mixed. This reaction can couple polymer chains so as to increase their effective molecular weight. An increase in the molecular weight of the polymer is in turn believed to enhance the physical and mechanical properties of the resulting biodegradable polymer composition. Furthermore, the increased molecular weight of the polymer is believed to improve the melt processing properties of the composition, and in particular the melt processing properties associated with producing blown film from the composition.

A polyepoxide will generally be used in an amount ranging from about 0.1-1wt.%, for example from about 0.1-0.7 wt.%, or from about 0.2-0.5 wt.%, relative to the total mass of the masterbatch and the one or more biodegradable polyesters to be melt mixed.

A biodegradable polymer composition prepared in accordance with the invention can advantageously have excellent physical and mechanical properties and is readily biodegradable. The composition can be conveniently processed using conventional polymer converting techniques such as extrusion, injection moulding, and thermoforming. The compositions are particularly suited for manufacturing film and sheet that may be converted into packaging materials. In that case, the one or more biodegradable polyesters are preferably selected from PCL, PBAT, PHBV, PES, and PBS.

The invention also provides a sheet or film formed from a biodegradable polymer composition prepared in accordance with the invention.

The biodegradable polymer composition may be provided in any suitable form that can be processed into a desired product such as sheet or film. Generally, the compositions will be provided in the form of pellets.

Embodiments of the invention are further described with reference to the following nonlimiting examples.

### EXAMPLES:

### EXAMPLE 1: Preparation of a biodegradable polymer composition.

25.5 kg of Starch acetate [fineness: 120 mesh; moisture: 8%; degree of substitution: 1.5%. sourced by China Starch, Shanghai, China] (DS of 0.5) having a water content of less than 1wt.%, 19.2kg poly(propylene carbonate) (PPC) [molecular weight: 110,000 Dalton. MFI: 9∼15g/10min; 190°C; 2.16 kg; moisture: <2%; density: 1.22g /cm³; glass temperature: 35∼40°C. Manufactured by PPCC, West Inner Mongolia, China], 9.8kg of glycerol [Pure 99.95%; saponification level], 4.8kg of sorbitol [70% mixed liquor sourced from Lianyungang, China], 0.6kg of stearic acid, 10kg of ethylene acrylic acid (EAA) (9% acid, melt flow index = 20) [e.g. Dow Primacor 3460], 6kg ethylene vinyl acetate (EVA) [VA: 14%; MI: 2. Beijing, China], 1.4kg calcium stearate and 0.12kg sodium hydroxide dissolved in a minimum amount of water were first mixed in a High-speed mixer is SHR-500; rotating speed Y: 980r/min to provide for a uniform distribution of all components (The solid materials were dry blended first in a high speed mixer and the liquid materials then added) then melt mixed in a ZSK-65 Twin Screw Extruder (L/D = 48). The temperature profile of the extruder was set at 100°C/130°C/160°C/160°C/150°C/140°C. The rotation speed of the screw was set at 300 rpm. A vacuum of -0.06 to -0.08 bar was applied during extrusion. The polymer melt was extruded as a strand, air cooled and cut into pellets. The masterbatch was found to have a melt flow index of > 4g/10min at 190°C with 2.16kg, and a water content of <0.2wt.%.

### EXAMPLE 2: Preparation of a further biodegradable polymer composition.

A composition consisting of 50wt.% of the polymer composition prepared in Example 1, 49.6 wt.% PBAT (Enpol G8060) and 0.3wt.% polyepoxide (Joncryl^{®} ADR-4368) was first dry blended and then melt mixed using a ZSK-65 Twin Screw Extruder with a rotational speed of 200 rpm. The temperature profile of the extruder was set at 130/145/165∼165/145/135/130/130°C. A vacuum of -0.04 to -0.05 bar was applied during extrusion. The resulting extrudate was water cooled and cut into pellets and was found to have a melt flow index of 7g/10min, at 190°C with 2.16kg.

The polymer composition has the following properties: MFI: 3g/10min; 190°C; 2.16kg, Moisture: 0.5%, Density: 1.2g/cm³.

The polymer composition prepared in accordance with Example 2 was blown into 20 micron thick film on a standard LDPE blown film line using the processing conditions tabulated below.

### Processing Conditions - Film Blowing

| **Extruder Speed** | 25 rpm |
|---|---|
| **Line Speed** | 50 m/min |
| **Bubble Height** | 4.5 m |
| **Blow-up Ratio** | 3:1 |

- Film blowing: F35 single screw; vertical blowing; length-diameter ratio: 30:1
- Rotating speed of screw: 15r/min;
- Diameter of bubble: 35cm;
- Film thickness: 0.03mm (30 µm)

### Temperature Profile of Extrusion Line

| **Zone** | **Temperature (°C)** |
|---|---|
| Hopper | 10-25, water cooling |
| Feed | 135 |
| Compression | 145 |
| Metering/mixing | 150 |
| Adaptors | 150 |
| Die | 150 |

The inside and outside cooling was gradually changed from weak to strong. Chilled air is preferred; 10-15°C worked best to avoid film blocking problems. The preferred blow-up ratios were between 2.5:1 and 3.5:1 higher blow-up ratios may lead to bubble instability problems and film creasing. Depending on equipment design and set-up film thicknesses between 15 µm and 120 µm can be achieved using the composition.

The resulting film was tested according to ASTM D-882 and found to exhibit a tensile strength at break of >18 MPa (compared to 12-15 MPa for the same film without the PPC), an elongation at break of >350%, a tear strength of 110 N (compared to 90 N for the same film without the PPC) and a falling dart impact strength of 70 g (compared to 65 g for the same film without the PPC). The film was also found to fully comply with the biodegradability requirements of EN 13432.

## Claims

1. A biodegradable polymer composition comprising the following components (a)-(e) and/or a reaction product(s) derived from melt mixing the components: (a) polyalkylene carbonate; (b) thermoplastic starch (TPS) and/or its constituent components; (c) polymer having pendant carboxylic acid groups; (d) transesterification catalyst; and (e) one or more biodegradable polyesters.

2. The biodegradable polymer composition according to claim 1 comprising components (a)-(e), and/or a reaction product(s) derived from melt mixing the components, in an amount of 0.5 wt.% to about 45 wt.% of (a), 2 wt.% to 63 wt.% of (b), 0.3 to 27 wt.% of (c), 0.005 wt.% to 0.45 wt.% of (d), and 5 wt.% to 85 wt.% of (e), relative to the total mass of (a)-(e), and such that the total mass of these components represents at least 50 wt.% of the biodegradable polymer composition.

3. The biodegradable polymer composition according to claim 1 or claim 2 further comprising component (f) polyepoxide, preferably a polyepoxide selected from diglycidyl ether of bisphenol A, butadiene diepoxide, 3,4-epoxycyclohexylmethyl-(3,4-epoxy)cyclohexane-carboxylate, vinyl cyclohexene dioxide, 4,4'-di(1,2-epoxyethyl)-diphenyl ether, 4,4'-(1,2-epoxyethyl)biphenyl, 2,2-bis(3,4-epoxycyclohexyl)propane, diglycidyl ether of resorcinol, diglycidyl ether of phloroglucinol, diglycidyl ether of methylphloroglucinol, bis(2,3-epoxycyclopentyl)ether, 2-(3,4-epoxy) cyclohexane-5,5-spiro(3,4-epoxy)-cyclohexane-m-dioxane, bis(3,4-epoxy-6-methylcyclohexyl)adipate, N,N'-m-phenylene-bis(4,5-epoxy-1,2-cyclohexane dicarboxyimide), triglycidyl ether of p-aminophenol, polyallylglycidyl ether, 1,3,5-tri(1,2-epoxyethyl)benzene, 2,2',4,4'-tetraglycidoxybenzophenone, tetraglycidoxy tetraphenylethane, polyglycidyl ether of phenol-formaldehyde novolac, triglycidyl ether of glycerin, triglycidyl ether of trimethylolpropane, poly glycidyl (meth) acrylate oligomers and (co) polymers, and combinations thereof.

4. The biodegradable polymer composition according to claim 3, wherein the polyepoxide (f) is present in an amount ranging from 0.1-1 wt.%, relative to the total mass of components (a)-(e).

5. The biodegradable polymer composition according to any one of claims 1 to 4, wherein the one or more biodegradable polyesters is selected from polycaprolactone (PCL); polylactic acid (PLA); polyhydroxy butyrate (PHB); polyethylene succinate (PES); polybutylene succinate (PBS); polybutylene adipate (PBA); poly(butylene adipate/terephthalate) (PBAT); poly(hydroxybutyrate valerate) (PHBV); cellulose acetate butyrate (CAB); cellulose acetate propionate (CAP); and combinations thereof.

6. The biodegradable polymer composition according to any one of claims 1 to 5, wherein the polyalkylene carbonate Is selected from polyethylene carbonate (PEC), polypropylene carbonate (PPC) and a combination thereof; the polymer having pendant carboxylic acid groups is selected from ethylene acrylic acid (EAA) copolymer, poly(EAA-vinyl alcohol) (EAAVA), poly(acrylic acid) (PAA), poly(methacrylic acid) (PMA), ethylene-methacrylic acid copolymers (EMAA), poly(acrylamide-acrylic acid) (PAAA), and combinations thereof; and the transesterification catalyst is an alkali metal hydroxide.

7. A method of preparing a biodegradable polymer composition, said method comprising melt mixing a masterbatch together with one or more biodegradable polyesters, wherein the masterbatch has been formed by melt mixing together: (a) polyalkylene carbonate; (b) thermoplastic starch (TPS) and/or its constituent components; (c) polymer having pendant carboxylic acid groups; and (d) transesterification catalyst.

8. The method according to claim 7, wherein the masterbatch is prepared by melt mixing together 5 wt.% to 50 wt.% (a), 20 wt.% to 70 wt.% (b), 3 wt.% to 30 wt.% (c), and 0.05 wt.% to 0.5 wt.% (d), relative to the total mass of these components, and such that the total mass of these components represents at least 50 wt.% of the biodegradable polymer composition.

9. The method according to claim 7 or 8, wherein the polyalkylene carbonate is selected from polyethylene carbonate (PEC), polypropylene carbonate (PPC) and a combination thereof; the polymer having pendant carboxylic acid groups is selected from ethylene acrylic acid (EAA) copolymer, poly(EAA-vinyl alcohol) (EAAVA), poly(acrylic acid) (PAA), poly(methacrylic acid) (PMA), ethylene-methacrylic acid copolymers (EMAA), poly(acrylamide-acrylic acid) (PAAA), and combinations thereof; and the transesterification catalyst is an alkali metal hydroxide.

10. The method according to any one of claims 7 to 9, wherein the one or more biodegradable polyesters is selected from polycaprolactone (PCL); polylactic acid (PLA); polyhydroxy butyrate (PHB); polyethylene succinate (PES); polybutylene succinate (PBS); polybutylene adipate (PBA); poly(butylene adipate/terephthalate) (PBAT); poly(hydroxybutyrate valerate) (PHBV); cellulose acetate butyrate (CAB); cellulose acetate propionate (CAP); and combinations thereof.

11. The method according to any one of claims 7 to 10, wherein 10 wt.% to 90 wt.% of the masterbatch is melt mixed with 5 wt.% to 85 wt.% of the one or more biodegradable polyesters, such that the total mass of these components represents at least 50 wt.% of the total mass of the resulting biodegradable polymer composition.

12. The method according to any one of claims 7 to 11 which comprises melt mixing the masterbatch together with the one or more biodegradable polyesters and a polyepoxide.

13. The method according to claim 12, wherein the polyepoxide is present in an amount ranging from 0.1-1 wt.%, relative to the total mass of the masterbatch and the one or more biodegradable polyesters to be melt mixed.

14. A biodegradable polymer composition according to any one of claims 1 to 6 in the form of a sheet or film.

## Patentansprüche

1. Biologisch abbaubare Polymerzusammensetzung umfassend die folgenden Komponenten (a) - (e) und/oder ein Reaktionsprodukt/Reaktionsprodukte erlangt durch Schmelzmischen der Komponenten: (a) Polyalkylencarbonat, (b) thermoplastische Stärke (TPS) und/oder ihre konstitutiven Komponenten; (c) Polymer, das CarbonsäureSeitengruppen aufweist; (d) Umesterungskatalysator; und (e) ein oder mehrere biologisch abbaubare Polyester.

2. Biologisch abbaubare Polymerzusammensetzung nach Anspruch 1, umfassend die Komponenten (a) - (e) und/oder ein Reaktionsprodukt/Reaktionsprodukte erlangt durch Schmelzmischen der Komponenten in einer Menge von 0,5 Gew.-% bis etwa 45 Gew.-% (a), 2 Gew.-% bis 63 Gew.-% (b), 0,3 bis 27 Gew.-% (c), 0,005 Gew.-% bis 0,45 Gew.-% (d) und 5 Gew.-% bis 85 Gew.-% (e), auf die Gesamtmasse von (a) - (e) bezogen, und derart, dass die Gesamtmasse dieser Komponenten mindestens 50 Gew.-% der biologisch abbaubaren Polymerzusammensetzung darstellt.

3. Biologisch abbaubare Polymerzusammensetzung nach Anspruch 1 oder Anspruch 2, des Weiteren umfassend die Komponente (f) Polyepoxid, bevorzugt ein Polyepoxid ausgewählt unter Diglycidylether von Bisphenol A, Butadiendiepoxid, 3,4-Epoxycyclohexylmethyl-(3,4-epoxy)cyclohexancarboxylat, Vinylcyclohexendioxid, 4,4'-Di(1,2-epoxyethyl)diphenylether, 4,4'-(1,2-Epoxyethylen)biphenyl, 2,2-Bis(3,4-epoxycyclohexyl)propan, Diglycidylether von Resorcin, Diglycidylether von Phloroglucinol, Diglycidylether von Methylphloroglucinol, Bis(2,3-epoxycyclopentyl)ether, 2-(3,4)-Epoxycyclohexan-5,5-spiro(3,4-epoxy)-cyclohexan-m-dioxan, Bis(3,4-epoxy-6-methylcyclohexyl)adipat, N,N'-m-Phenylen-bis(4,5-epoxy-1,2-cyclohexandicarboxyimid), Triglycidylether von p-Aminophenol, Polyallylglycidylether, 1,3,5-Tri(1,2-epoxyethyl)benzol, 2,2'4,4'-Tetraglycidoxybenzophenon, Tetraglycidoxytetraphenylethan, Polyglycidylether von Phenol-Formaldehyd-Novolac, Triglycidylether von Glycerin, Triglycidylether von Trimethylolpropan, Polyglycidyl(meth)acrylat-Oligomeren und (Co)-Polymeren und Kombinationen davon.

4. Biologisch abbaubare Polymerzusammensetzung nach Anspruch 3, wobei das Polyepoxid (f) in einer Menge im Bereich von 0,1- 1 Gew.-%, auf die Gesamtmasse der Komponenten (a) - (e) bezogen, vorliegt.

5. Biologisch abbaubare Polymerzusammensetzung nach einem der Ansprüche 1 bis 4, wobei der eine oder die mehreren biologisch abbaubaren Polyester ausgewählt wird/werden unter Polycaprolacton (PCL), Polymilchsäure (PLA), Polyhydroxybutyrat (PHB), Polyethylensuccinat (PES), Polybutylensuccinat (PBS), Polybutylenadipat (PBA), Poly(butylenadipat-Terepththalat) (PBAT), Poly(hydroxybutyratvalerat) (PHBV), Celluloseacetatbutyrat (CAB), Celluloseacetatpropionat (CAP) und Kombinationen davon.

6. Biologisch abbaubare Polymerzusammensetzung nach einem der Ansprüche 1 bis 5, wobei das Polyalkylencarbonat ausgewählt wird unter Polyethylencarbonat (PEC), Polypropylencarbonat (PPC) und einer Kombination davon; das Polymer, das Carbonsäureseitengruppen aufweist, unter Ethylenacrylsäure- (EAA-) Copolymer, Poly(EAA-Vinylalkohol) (EAAVA), Poly(acrylsäure (PAA), Poly(methacrylsäure) (PMA), Ethylen-Methacrylsäure-Copolymeren (EMAA), Poly(acrylamid-Acrylsäure) (PAAA) und Kombinationen davon ausgewählt wird; und der Umesterungskatalysator ein Alkalimetallhydroxid ist.

7. Verfahren für die Herstellung einer biologisch abbaubaren Polymerzusammensetzung, wobei das Verfahren das Schmelzmischen eines Masterbatch zusammen mit einem oder mehreren biologisch abbaubaren Polyestern umfasst, wobei der Masterbatch durch zusammen Schmelzmischen gebildet worden ist von: (a) Polyalkylencarbonat; (b) thermoplastischer Stärke (TPS) und/oder ihrer konstitutiven Komponenten; (c) Polymer, das Carbonsäureseitengruppen aufweist; und (d) einem Umesterungskatalysator.

8. Verfahren nach Anspruch 7, wobei der Masterbatch hergestellt wird durch zusammen Schmelzmischen von 5 Gew.-% bis 50 Gew.-% (a), 20 Gew.-% bis 70 Gew.-% (b), 3 Gew.-% bis 30 Gew.-% (c) und 0,05 Gew.-% bis 0,5 Gew.-% (d), auf die Gesamtmasse dieser Komponenten bezogen, und derart, dass die Gesamtmasse dieser Komponenten mindestens 50 Gew.-% der biologisch abbaubaren Polymerzusammensetzung darstellt.

9. Verfahren nach Anspruch 7 oder 8, wobei das Polyalkylencarbonat unter Polyethylencarbonat (PEC), Polypropylencarbonat (PPC) und einer Kombination davon ausgewählt wird; das Polymer, das Carbonbsäureseitengruppen aufweist, unter Ethylenacrylsäure- (EAA-) Copolymer, Poly(EAA-Vinylalkohol) (EAAVA), Poly(acrylsäure) (PAA), Poly(methacrylsäure) (PMA), Ethylenmethacrylsäure-Copolymeren (EMAA), Poly(acrylamid-Acrylsäure) (PAAA) und Kombinationen davon ausgewählt wird; und der Umesterungskatalysator ein Alkalimetallhydroxid ist.

10. Verfahren nach einem der Ansprüche 7 bis 9, wobei der eine oder die mehreren biologisch abbaubaren Polyester ausgewählt werden unter Polycaprolacton (PCL), Polymilchsäure (PLA), Polyhydroxybutyrat (PHB), Polyethylensuccinat (PES), Polybutylensuccinat (PBS), Polybutylenadipat (PBA), Poly(butylenadipat-Terepththalat) (PBAT), Poly(hydroxybutyratvalerat) (PHBV), Celluloseacetatbutyrat (CAB), Celluloseacetatpropionat (CAP) und Kombinationen davon.

11. Verfahren nach einem der Ansprüche 7 bis 10, wobei 10 Gew.-% bis 90 Gew.-% des Masterbatch mit 5 Gew.-% bis 85 Gew.-% des einen oder der mehreren biologisch abbaubaren Polyester schmelzgemischt werden, derart, dass die Gesamtmasse dieser Komponenten mindestens 50 Gew.-% der Gesamtmasse der resultierenden biologisch abbaubaren Polymerzusammensetzung darstellt.

12. Verfahren nach einem der Ansprüche 7 bis 11, das das Schmelzmischen des Masterbatch zusammen mit dem einen oder den mehreren biologisch abbaubaren Polyestern und einem Polyepoxid umfasst.

13. Verfahren nach Anspruch 12, wobei das Polyepoxid in einer Menge im Bereich von 0,1 - 1 Gew.-%, auf die Gesamtmasse des Masterbatch und des einen oder der mehreren biologisch abbaubaren Polyester, die schmelzgemischt werden sollen, bezogen, vorliegt.

14. Biologisch abbaubare Polymerzusammensetzung nach einem der Ansprüche 1 bis 6 in Form einer Platte oder Folie.

## Revendications

1. Composition de polymère biodégradable comprenant les composants (a)-(e) suivants et/ou un/des produit(s) de réaction dérivé(s) du mélange à l'état fondu des composants: (a) carbonate de polyalkylène; (b) amidon thermoplastique (TPS) et/ou ses composants constituants; (c) un polymère ayant des groupes d'acide carboxylique latéraux; (d) un catalyseur de transestérification; et (e) un ou plusieurs polyesters biodégradables.

2. Composition de polymère biodégradable selon la revendication 1, comprenant les composants (a)-(e), et/ou un/des produit(s) de réaction dérivé(s) du mélange à l'état fondu des composants, en une quantité de 0,5 % en poids à environ 45 % en poids de (a), de 2 % en poids à 63 % en poids de (b); de 0,3 à 27 % en poids de (c); de 0,005 % en poids à 0,45 % en poids de (d), et de 5 % en poids à 85 % en poids de (e), par rapport à la masse totale de (a)-(e), et de telle sorte que la masse totale de ces composants représente au moins 50 % en poids de la composition de polymère biodégradable.

3. Composition de polymère biodégradable selon la revendication 1 ou la revendication 2, comprenant en outre un composant (f) polyépoxyde, de préférence un polyépoxyde sélectionné parmi: éther diglycidylique de bisphénol A, diépoxyde de butadiène, 3,4-époxycyclohexylméthyl-(3,4-époxy)cyclohexane-carboxylate, dioxyde de vinylcyclohexène, éther de 4,4'-di(1,2-époxyéthyl)-diphényle, 4,4'-(1,2-époxyéthyl)biphényle, 2,2-bis(3,4-époxycyclohexyl)propane, éther diglycidylique de résorcinol, éther diglycidylique de phloroglucinol, éther diglycidylique de méthylphloroglucinol, bis(2,3-époxycyclopentyl)éther, 2-(3,4-époxy)-cyclohexane-5,5-spiro(3,4-époxy)-cyclohexane-m-dioxane, bis(3,4-époxy-6-méthylcyclohexyl)adipate, N,N'-m-phénylène-bis(4,5-époxy-1,2-cyclohexane dicarboxyimide), éther triglycidylique de p-aminophénol, éther polyallylglycidylique, 1,3,5-tri(1,2-époxyéthyl)benzène, 2,2',4,4'-tétraglycidoxybenzophénone, tétraglycidoxy-tétraphényléthane, éther polyglycidylique de phénol-formaldéhyde novolac, éther triglycidylique de glycérine, éther triglycidylique de triméthylolpropane, oligomères et (co) polymères de poly(méthacrylate de glycidyle), et des combinaisons de ceux-ci.

4. Composition de polymère biodégradable selon la revendication 3, dans laquelle le polyépoxyde (f) est présent en une quantité allant de 0,1-1 % en poids, par rapport à la masse totale des composants (a)-(e).

5. Composition de polymère biodégradable selon l'une quelconque des revendications 1 à 4, dans laquelle l'un ou les plusieurs polyesters biodégradables sont sélectionnés parmi: polycaprolactone (PCL); acide polylactique (PLA); polyhydroxybutyrate (PHB); succinate de polyéthylène (PES); succinate de polybutylène (PBS); polybutylène adipate (PBA); poly(butylène adipate/téréphtalate) (PBAT); poly(hydroxybutyrate valérate) (PHBV); acétate de cellulose butyrate (CAB); acétate de cellulose propionate (CAP); et des combinaisons de ceux-ci.

6. Composition de polymère biodégradable selon l'une quelconque des revendications 1 à 5, dans laquelle le carbonate de polyalkylène est sélectionné parmi: carbonate de polyéthylène (PEC), carbonate de polypropylène (PPC) et une combinaison de ceux-ci; le polymère ayant des groupes d'acide carboxylique latéraux est sélectionné parmi: copolymère d'éthylène-acide acrylique (EAA), poly(EAA-alcool vinylique) (EAAVA), poly(acide acrylique) (PAA), poly(acide méthacrylique) (PMA), copolymères d'éthylène-acide méthacrylique (EMAA), poly(acrylamide-acide acrylique) (PAAA), et des combinaisons de ceux-ci; et le catalyseur de transestérification est un hydroxyde de métal alcalin.

7. Procédé de préparation d'une composition de polymère biodégradable, ledit procédé comprenant mélanger à l'état fondu un mélange maître avec un ou plusieurs polyesters biodégradables, dans lequel le mélange maître a été formé en mélangeant ensemble à l'état fondu: (a) du carbonate de polyalkylène; (b) de l'amidon thermoplastique (TPS) et/ou ses composants constituants; (c) un polymère ayant des groupes d'acide carboxylique latéraux; et (d) un catalyseur de transestérification.

8. Procédé selon la revendication 7, dans lequel le mélange maître est préparé en mélangeant ensemble à l'état fondu de 5 % en poids à 50 % en poids de (a), de 20 % en poids à 70 % en poids de (b), de 3 % en poids à 30 % en poids de (c) et de 0,05 % en poids à 0,5 % en poids de (d), par rapport à la masse totale de ces composants, et de telle sorte que la masse totale de ces composants représente au moins 50 % en poids de la composition de polymère biodégradable.

9. Procédé selon la revendication 7 ou 8, dans lequel le carbonate de polyalkylène est sélectionné parmi: carbonate de polyéthylène (PEC), carbonate de polypropylène (PPC) et une combinaison de ceux-ci; le polymère ayant des groupes d'acide carboxylique latéraux est sélectionné parmi: un copolymère d'éthylène-acide acrylique (EAA), poly(EAA-alcool vinylique) (EAAVA), poly(acide acrylique) (PAA), du poly(acide méthacrylique) (PMA), des copolymères d'éthylène-acide méthacrylique (EMAA), poly(acrylamide-acide acrylique) (PAAA), et des combinaisons de ceux-ci; et le catalyseur de transestérification est un hydroxyde de métal alcalin.

10. Procédé selon l'une quelconque des revendications 7 à 9, dans lequel l'un ou les plusieurs polyesters biodégradables sont sélectionnés parmi: polycaprolactone (PCL); acide polylactique (PLA); polyhydroxybutyrate (PHB); succinate de polyéthylène (PES); succinate de polybutylène (PBS); polybutylène adipate (PBA); poly(butylène adipate/téréphtalate) (PBAT); poly(hydroxybutyrate valérate) (PHBV); acétate de cellulose butyrate (CAB); acétate de cellulose propionate (CAP); et des combinaisons de ceux-ci.

11. Procédé selon l'une quelconque des revendications 7 à 10, dans lequel de 10 % en poids à 90 % en poids du mélange maître sont mélangés à l'état fondu avec de 5 % en poids à 85 % en poids de l'un ou des plusieurs polyesters biodégradables, de telle sorte que la masse totale de ces composants représente au moins 50 % en poids de la masse totale de la composition de polymère biodégradable résultante.

12. Procédé selon l'une quelconque des revendications 7 à 11, qui comprend mélanger à l'état fondu le mélange maître avec l'un ou les plusieurs polyesters biodégradables et un polyépoxyde.

13. Procédé selon la revendication 12, dans lequel le polyépoxyde est présent en une quantité allant de 0,1-1 % en poids, par rapport à la masse totale du mélange maître et de l'un ou des plusieurs polyesters biodégradables à mélanger à l'état fondu.

14. Composition de polymère biodégradable selon l'une quelconque des revendications 1 à 6, sous forme d'une feuille ou d'un film.
